# EUROPEAN PATENT SPECIFICATION

(11) **EP 0 445 396 B1**
(45) Date of publication and mention of the grant of the patent: **25.05.1994**
(21) Application number: 90124102.6
(22) Date of filing: 13.12.1990
(51) Int. Cl.: A23G 9/08, A23G 9/12, A23G 9/16

(54) **Ice cream making machine, with loading hopper provided with non-reflux means**
Speiseeismaschine mit einem gegen Rückfluss versehenen Fülltrichter
Sorbetière avec trémie de chargement munie d'un organe anti-reflux

(30) Priority: 16.02.1990 IT 1510990 U
(43) Date of publication of application: 11.09.1991
(73) Proprietor: Carpigiani S.r.L., I-40011 Anzola Emilia, Bologna (IT)
(72) Inventor: Cocchi, Gino, I-40011 Anzola Emilia, Bologna (IT)
(74) Representative: Porsia, Attilio, Dr.

(56) References cited:
- EP-A- 0 123 789
- FR-A- 1 024 253
- US-A- 1 519 746
- US-A- 1 837 565
- US-A- 2 515 722
- US-A- 2 558 449
- US-A- 2 608 833

## Description

The present invention relates to ice cream making machines, and more particularly to the machines for the batchwise production of ice cream, of the type comprising a horizontal-axis freezing cylinder closed at its rear end, and equiped at its interior with a stirrer, and further provided at its front side with a closure plate provided at its bottom with an ice cream discharge port with respective closing door, and further provided at its upper region with a liquid mixture loading hopper communicating with the interior of the freezing cylinder through an inlet port.

The disadvantage of these known machines is that during the freezing step a portion of the ice cream being formed rises back up the wall of the hopper through the inlet port. This portion of ice cream is not worked completely and at the end of the freezing step, before the ice cream is withdrawn through the discharge port, the operator is compelled to push this ice cream portion again into the freezing cylinder by means of a paddle.

This disadvantage implies problems, both as to the standpoint of the quality of the ice cream being produced, and as to the hygienic standpoint.

Therefore, the main object of the present invention is to provide a device which may be easily mounted on the known ice cream making machines of the type mentioned above, which eliminates these and other disadvantages of the said known machines.

According to a main characteristic of the present invention, this object is achieved by associating the cover of the loading hopper to a mobile closure member which, in a position (the ice cream making position), completely closes the communication port between the hopper and the freezing cylinder, whereas in the position wherein the liquid mixture is loaded (i.e. when the cover of the hopper is lifted) it clears said port so as to permit the liquid mixture to be fed into the freezing cylinder.

Advantageously, said mobile closure member is a sliding gate member which is pivoted to the cover of the hopper.

Further objects, advantages and characteristics of the device according to the invention will become more apparent from the following detailed description of a embodiment thereof, made with reference to the accompanying drawing, wherein:
Fig. 1 is a diagrammatic longitudinal sectional view of the freezing cylinder of a machine with a horizontal-axis cylinder, for making ice cream by batches, provided with the device according to the invention, in the liquid mixture feeding position, i.e. with the cover of the hopper in the lifted condition, and
Fig. 2 is a view similar to Fig. 1, with the cover in the lowered condition and with the device in the position wherein it closes the communication port between the hopper and the cylinder.

With reference to the drawing, the numeral 1 indicates the freezing cylinder of a machine for making ice cream by batches. The rear side of the cylinder 1 is closed by a bottom member 101 having a central hole through which the end portion of a shaft 2 mounting a stirrer 3 is rotatably conducted. The shaft 2 is actuated, in a known manner, by a suitable geared motor (not shown). The cylinder 1 is in heat-exchange relationship, in a known manner, with the evaporator of a refrigerating circuit, also not shown.

The front end of the cylinder 1 is closed by a plate 4. The plate 4 is provided in its lower portion with an ice cream discharge opening 5 which is closed by a door 6. At the upper portion of the plate 4 there is provided a hopper 7 which communicates, at the bottom thereof, through an inlet port 8 in the plate 4, with the interior of the cylinder 1. The hopper 7, in turn, is provided with an overturnable cover 9.

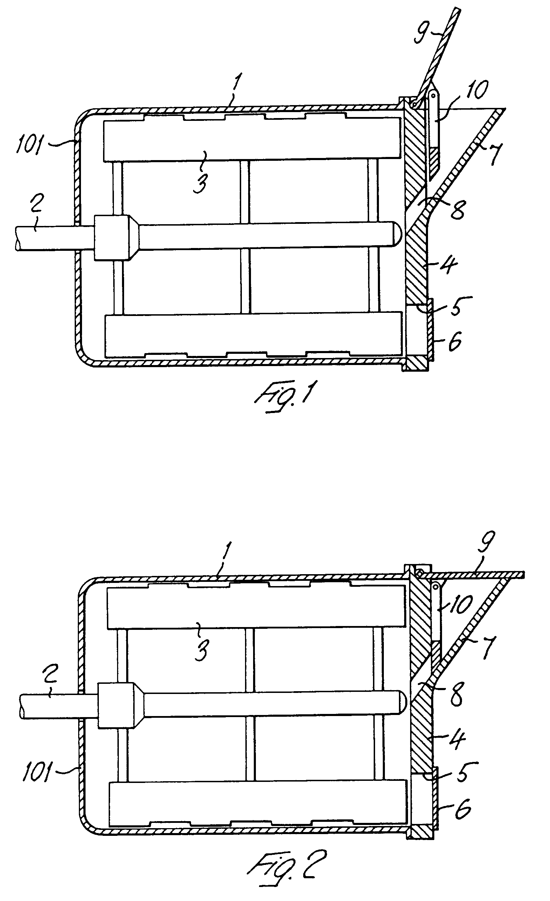

According to the present invention, the cover 9 has pivoted thereto a plate 10 which, in the closed position of the cover 9, extends to the bottom of the hopper 7 and adheres both to the rear wall and the bottom of said hopper 7, as shown in the Fig. 2 of the drawing, thus closing the inlet port 8 completely. When the cover is lifted (position of Fig. 1), the plate 10 is also lifted with a gate-like movement, so as to clear the inlet 8 and permit the liquid mixture poured into the hopper to flow into the freezing cylinder 1 through said inlet 8. Advantageously, the lower end of the gate-like plate 10 has a wedge profile so as to fit into the bottom of the hopper 7.

The operation of the device described above is now apparent. By lifting the cover 9 (position of Fig. 1), the inlet port 8 is opened so that the ice cream liquid mixture poured into the hopper 7 may flow into the cylinder 1 freely. By lowering the cover 9, the plate 10 is also lowered, with a gate-like movement, to engage both the bottom and the rear wall of the hopper 7, thus closing the port 8 so as to prevent the ice cream to reflux into the hopper 7 during the successive step wherein the ice cream is worked in the cylinder 1 by means of the stirrer 3.

## Claims

1. A machine for the batchwise production of ice cream, of the type comprising a horizontal-axis freezing cylinder (1) which is closed at its rear end (101), is provided with a stirrer (3) at its interior, and is provided at its front side with a closure plate (4) having in its lower portion an ice cream discharge port (5) provided with a closing door (6), and at its upper portion a liquid mixture loading hopper (7) provided with an overturnable cover (9) and communicating with the interior of the freezing cylinder (1) through an inlet port (8), characterized by the fact that said overturnable cover (9) of the hopper (7) has associated therewith a sliding gate member (10) capable, when the cover (9) of the hopper (7) is lowered to the closed position, of closing said inlet port (8).

2. A machine according to claim 1, characterized by the fact that said sliding gate member (10) comprises a plate which is suspended pivotably at one end thereof to said cover (9) or to a member associated with the cover (9) of the hopper (7), and which extends downwards into the interior of the hopper (7), the suspension means of said plate being constructed and arranged in such a manner that when the cover (9) is lifted the lower end of said plate (10) is also lifted so as to clear completely the inlet port (8) for the liquid mixture, whereas when the cover (9) is lowered said plate (10) will be moved so that its lower end will matingly engage the bottom of the hopper (7), and its back surface will matingly engage the rear wall of said hopper (7), thus closing said inlet port (8).

## Patentansprüche

1. Maschine zur chargenweisen Herstellung von Eiscreme mit einem Gefrierzylinder (1) mit horizontaler Achse, der am rückwärtigen Ende (Pos. 101) geschlossen ist, der eine Rühreinrichtung (3) in seinem Inneren enthält, und der an seiner Vorderseite eine Verschlußplatte (4) hat, die an ihrem unteren Ende eine Abgabeöffnung (5) für Eiscreme hat, die mit einer Verschlußtür (6) versehen ist, und in ihrem oberen Bereich einen Einfülltrichter (7) für eine flüssige Mischung, wobei der Trichter mit einer schwenkbaren Abdeckung (9) versehen ist und mit dem Inneren des Gefrierzylinders (1) über eine Einlaßöffnung (8) in Verbindung steht,
**dadurch gekennzeichnet,**
daß mit der schwenkbaren Abdeckung (9) des Trichters (7) ein gleitendes Verschlußglied (10) verbunden ist, das, wenn die Abdeckung (9) des Trichters (7) in die geschlossene Position abgesenkt ist, die Einlaßöffnung (8) verschließen kann.

2. Maschine nach Anspruch 1,
**dadurch gekennzeichnet,**
daß das gleitende Verschlußglied (10) eine Platte aufweist, die schwankbar an einem Ende an die Abdeckung (9) angelenkt ist oder an ein Teil, das mit der Abdeckung (9) des Trichters (7) verbunden ist, und daß sie sich nach unten in das Innere des Trichters (7) erstreckt, wobei das Haltemittel der Platte so konstruiert und angeordnet ist, daß, wenn die Abdeckung (9) angehoben ist, daß dann das untere Ende der Platte (10) auch angehoben ist, so daß die Einlaßöffnung (8) für die flüssige Mischung vollständig freigegeben ist, wohingegen, wenn die Abdeckung (9) abgesenkt ist, die Platte (10) so bewegt wird, daß ihr unteres Ende passend in den Boden des Trichters (7) eingreift, und daß ihre rückwärtige Fläche passen an der rückwärtigen Wand des Trichters (7) anliegt, so daß die Einlaßöffnung (8) verschlossen ist.

## Revendications

1. Une machine pour la fabrication discontinue de crème glacée, du type comprenant un cylindre de congélation à axe horizontal (1) qui est fermé à son extrémité arrière (101), qui comporte à l'intérieur un agitateur (3), et qui comporte sur son côté avant une plaque de fermeture (4) ayant dans sa partie inférieure un orifice d'évacuation de crème glacée (5), muni d'une porte de fermeture (6), et dans sa partie supérieure une trémie de chargement de mélange liquide (7) munie d'un couvercle rabattable (9), et communiquant avec l'intérieur du cylindre de congélation (1) par un orifice d'entrée (8), caractérisée par le fait qu'une porte glissante (10) est associée au couvercle rabattable (9) de la trémie (7), et cette porte est capable de fermer l'orifice d'entrée (8) lorsque le couvercle (9) de la trémie (7) est abaissé vers la position fermée.

2. Une machine selon la revendication 1, caractérisée par le fait que la porte glissante (10) comprend une plaque dont une extrémité est suspendue de façon pivotante au couvercle (9) ou à un élément associé au couvercle (9) de la trémie (7), et qui s'étend vers le bas à l'intérieur de la trémie (7), les moyens de suspension de cette plaque étant réalisés et disposés d'une manière telle que lorsque le couvercle (9) est soulevé, l'extrémité inférieure de la plaque (10) soit également soulevée de façon à dégager complètement l'orifice d'entrée (8) pour le mélange liquide, tandis que lorsque le couvercle (9) est abaissé, la plaque (10) est déplacée de façon que son extrémité inférieure s'adapte à la partie inférieure de la trémie (7), et de façon que sa surface arrière s'adapte à la paroi arrière de la trémie (7), pour fermer ainsi l'orifice d'entrée (8).
